# EUROPÄISCHE PATENTSCHRIFT

(11) **EP 3 450 201 B1**
(45) Veröffentlichungstag und Bekanntmachung des Hinweises auf die Patenterteilung: **01.07.2020**
(21) Anmeldenummer: 17189216.9
(22) Anmeldetag: 04.09.2017
(51) Int. Cl.: B60C 1/00, C08J 3/20, C08L 7/00

(54) **VERFAHREN ZUR HERSTELLUNG EINER KAUTSCHUKMISCHUNG UND KAUTSCHUKMISCHUNG HERGESTELLT NACH DEM VERFAHREN**
METHOD FOR PRODUCING A RUBBER MIXTURE AND RUBBER MIXTURE PRODUCED ACCORDING TO THE METHOD
PROCÉDÉ DE FABRICATION D'UN MÉLANGE DE CAOUTCHOUC ET MÉLANGE DE CAOUTCHOUC FABRIQUÉ SELON LE PROCÉDÉ

(43) Veröffentlichungstag der Anmeldung: 06.03.2019
(73) Patentinhaber: Continental Reifen Deutschland GmbH, 30165 Hannover (DE)
(72) Erfinder: Albers, Antonia, 30169 Hannover (DE); Schwarzendahl, Corinna, 30167 Hannover (DE); Rennmann, Tim, 30177 Hannover (DE); Dahlke, Markus, 31515 Wunstorf (DE); Costa, Mariana, 50480 Kuala Lumpur (MY)
(74) Vertreter: Finger, Karsten

(56) Entgegenhaltungen:
- EP-A1- 0 439 237
- EP-A1- 2 740 756
- DE-A1- 19 959 932
- US-A1- 2014 128 525

## Beschreibung

Die Erfindung betrifft ein Verfahren zur Herstellung einer Kautschukmischung enthaltend wenigstens eine Substanz gemäß Formel I) oder II)

I) H₂N-R-SSO₃H

II) (H₂N-R-SSO₃)ₙMⁿ⁺,

wobei R ausgewählt ist aus der Gruppe bestehend aus C₁-C₂₀-Alkylgruppen, C₆-C₂₀-Arylgruppen, C₂-C₂₀-Alkenylgruppen, C₂-C₂₀-Alkinylgruppen; M für Metall steht und n eine ganze Zahl ist,
wobei das Verfahren wenigstens eine Grundmischstufe und wenigstens eine Fertigmischstufe umfasst.
Die Erfindung betrifft ferner eine Kautschukmischung, die nach dem Verfahren hergestellt ist.

Es ist bekannt, Kautschukmischungen, insbesondere für Fahrzeugreifen, neben Kautschuk, Füllstoffen, Alterungsschutzmitteln und Vulkanisationsagenzien zusätzlich weitere Substanzen zur Optimierung der Eigenschaften zuzugeben.

In der EP 2589619 A1 wird offenbart, dass einer Kautschukmischung die Substanz S-(3-Aminopropyl)Thioschwefelsäure oder ein Metallsalz davon zugegeben wird.
Bei der Herstellung der Kautschukmischung wird diese Substanz zusammen mit einem Kautschuk und einem Füllstoff vorvermischt.

Die DE 102013018353 A1 offenbart, dass eine Thioschwefelsäureverbindung mit einer Aminogruppe bei der Herstellung eines Reifenelements der Kautschukmischung in einem ersten Schritt (A) zusammen mit einer Kautschukkomponente und einem Füllstoff vermischt wird und beim Mischen im Schritt (A) eine Temperatur im Bereich von 145 bis 170 °C für 20 Sekunden oder mehr gehalten wird. In einem weiteren Schritt (B) wird die Mischung aus Schritt (A) durch Zugabe von Schwefel und Vulkanisationsbeschleuniger zu einer Fertigmischung verarbeitet.

Wie im Stand der Technik beschrieben werden von derartigen Substanzen im Vergleich zu Kautschuk und Füllstoff nur geringe Mengen verwendet, wie 0,1 bis 2,5 phr. Bei den beschriebenen Verfahren wird also die jeweilige genannte Substanz als Feinchemikalie in einer Grundmischstufe zugegeben. Dies bedeutet, dass bei der Herstellung der Grundmischung die genannte Substanz mitunter als einzige Feinchemikalie auf einer Feinwaage separat gewogen werden muss, was eine gewisse Komplexität bei der Herstellung der Mischung bedeutet.

Gleichzeitig ist das in der DE 102013018353 A1 beschriebene Verfahren durch die lange Mischzeit bei hohen Temperaturen vergleichsweise energieaufwändig.

Der vorliegenden Erfindung liegt daher die Aufgabe zugrunde, ein Verfahren zur Herstellung einer Kautschukmischung der eingangs genannten Art bereit zu stellen, welches vergleichsweise einfach und energie- und kostenoptimiert ist. Dabei sollen die Eigenschaften der hergestellten Kautschukmischung nicht signifikant verschlechtert werden und damit vergleichbar bleiben.

Gelöst wird die Aufgabe dadurch, dass die wenigstens eine Substanz gemäß Formel I) oder II) in wenigstens einer Fertigmischstufe zugegeben wird.

Das Verfahren zur Herstellung der Kautschukmischung umfasst wenigstens eine Grundmischstufe und wenigstens eine Fertigmischstufe. Wie dem Fachmann bekannt, werden in der Fertigmischstufe Vulkanisationschemikalien zugegeben, wodurch die Fertigmischung erzeugt wird, die dann später vulkanisiert werden kann. Die Vulkanisationschemikalien stellen insbesondere aufgrund der geringen Mengen, die verwendet werden, Feinchemikalien dar, die anders gehandhabt werden als Kautschuk und Füllstoffe, die in großen Mengen zugegeben werden. Dadurch, dass die Substanz gemäß Formel I) oder II) erst in der Fertigmischstufe zugegeben wird, ist es nicht nötig bereits in der Grundmischstufe diese Substanz abzuwiegen und zuzugeben. Somit können sämtliche enthaltenen Feinchemikalien erst für die Fertigmischstufe dosiert werden.
Dies vereinfacht das Herstellverfahren.

Gleichzeitig wurde festgestellt, dass es mit dem erfindungsgemäßen Verfahren nicht nötig ist, wie in der DE 102013018353 A1 beschrieben, die Grundmischung über 20 Sekunden bei den angegebenen vergleichsweise hohen Temperaturen herzustellen, wenn die Substanz in der Fertigmischstufe zugegeben wird.
Das erfindungsgemäße Verfahren ermöglicht somit eine Energie- und damit auch Kostenersparnis.

Die Substanz ist gemäß Formel I) oder II) folgendermaßen aufgebaut:

I) H₂N-R-SSO₃H

II) (H₂N-R-SSO₃)ₙMⁿ⁺,

wobei R ausgewählt ist aus der Gruppe bestehend aus C₁-C₂₀-Alkylgruppen, C₆-C₂₀-Arylgruppen, C₂-C₂₀-Alkenylgruppen, C₂-C₂₀-Alkinylgruppen; M für Metall steht, und n eine ganze Zahl ist.

Die Substanz kann also als Säure (Formel I) und/oder als ein beliebiges Metallsalz (Formell II) vorliegen. Erfindungswesentlich ist, dass wenigstens eine Substanz gemäß den Formeln I) oder II) in wenigstens einer Fertigmischstufe zugegeben wird.

Die Alkenyl-, Alkinyl,- und Alkylgruppen können verzweigt oder unverzweigt sein oder aliphatische zyklische Bausteine und/oder Substituenten mit Heteroatomen, insbesondere Stickstoff N, Sauerstoff O und Schwefel S oder Halogenen F, Cl, Br, I, aufweisen. Die Arylgruppen können zudem aliphatische Seitengruppen und/oder Substituenten mit Heteroatomen, insbesondere Stickstoff N, Sauerstoff O und Schwefel S oder Halogenen F, Cl, Br, I aufweisen.

Bevorzugt ist R eine Alkylgruppe mit 2 bis 6 Kohlenstoffatomen, also eine C₂-C₆-Alkylgruppe.
Besonders bevorzugt ist R eine Propylgruppe (3 Kohlenstoffatome), wodurch sich das Molekül H₂N-(CH₂)₃-SSO₃H bzw. dessen Metallsalz nach Formel II) ergibt.
In Formel II) wird durch Mⁿ⁺ ausgedrückt, dass es sich um ein positiv geladenes Metallkation handelt. Nach der Ladung n+ des Kations sind entsprechend n anionische Moleküle H₂N-R-SSO₃⁻ in Formel II) umfasst.
Gemäß einer bevorzugten Ausführungsform der Erfindung ist M = Na, also Natrium und Mⁿ⁺ damit ein Natriumion Na⁺.

In der wenigstens einen Grundmischstufe werden der Kautschukmischung bei dem erfindungsgemäßen Verfahren insbesondere wenigstens ein Kautschuk und bevorzugt wenigstens ein Füllstoff zugegeben.

Bei dem Kautschuk kann es sich um alle dem Fachmann bekannten Typen handeln.
Der Kautschuk ist dabei bevorzugt ausgewählt aus der Gruppe bestehend aus natürlichem Polyisopren, synthetischem Polyisopren, epoxidiertem Polyisopren, Butadien-Kautschuk, Butadien-Isopren-Kautschuk, lösungspolymerisiertem Styrol-Butadien-Kautschuk, emulsionspolymerisiertem Styrol-Butadien-Kautschuk, Styrol-Isopren-Kautschuk, Flüssigkautschuken mit einem Molekulargewicht Mw von größer als 20000 g/mol, Halobutyl-Kautschuk, Polynorbornen, Isopren-Isobutylen-Copolymer, Ethylen-Propylen-Dien-Kautschuk, Nitril-Kautschuk, Chloropren-Kautschuk, Acrylat-Kautschuk, FluorKautschuk, Silikon-Kautschuk, Polysulfid-Kautschuk, Epichlorhydrin-Kautschuk, Styrol-Isopren-Butadien-Terpolymer, hydriertem Acrylnitrilbutadien-Kautschuk und hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-DienKautschuk kommen bei der Herstellung von technischen Gummiartikeln, wie Gurte, Riemen und Schläuche, und/oder Schuhsohlen zum Einsatz.

Bevorzugt wird als wenigstens eine Kautschukkomponente wenigstens ein Dienkautschuk zugegeben.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Bevorzugt ist der Dienkautschuk, insbesondere für die Verwendung der hergestellten Kautschukmischung in Fahrzeugreifen, ausgewählt aus der Gruppe bestehend aus natürlichem Polyisopren, synthetischem Polyisopren, Butadien-Kautschuk und Styrol-Butadien-Kautschuk.
Gemäß einer bevorzugten Ausführungsform der Erfindung ist der Dienkautschuk ausgewählt aus der Gruppe bestehend aus natürlichem Polyisopren und Butadien-Kautschuk.

Gemäß einer bevorzugten Ausführungsform der Erfindung enthält die Kautschukmischung als Kautschukkomponenten 10 bis 100 phr natürliches Polyisopren und/oder 10 bis 100 phr Butadienkautschuk, wobei die Mengen für den Fall, dass beide vorhanden sind, entsprechend < 100 phr sind.
Bei dem erfindungsgemäßen Verfahren werden somit in der Grundmischstufe bevorzugt 10 bis 100 phr natürliches Polyisopren und/oder 10 bis 100 phr Butadienkautschuk zugegeben.
Die in dieser Schrift verwendete Angabe phr (parts per hundred parts of rubber by weight) ist dabei die in der Kautschukindustrie übliche Mengenangabe für Mischungsrezepturen, hier bezogen auf die spätere Fertigmischung. Die Dosierung der Gewichtsteile der einzelnen Substanzen wird in dieser Schrift auf 100 Gewichtsteile der gesamten Masse aller in der Mischung vorhandenen Kautschuke bezogen mit einem Molekulargewicht M_{w} gemäß GPC von größer als 20000 g/mol.
(Die Bestimmung des Gewichtsmittels Mw des Molekulargewichtes erfolgt mittels Gelpermeationschromatographie (GPC mit Tetrahydrofuran (THF) als Elutionsmittel bei 40 °C, Apparat PPS, kalibriert mit Poly-styrol-Standard; Größenausschlußchromatographie; engl. SEC = size exclusion chromatography in Anlehnung an BS ISO 11344:2004).)

Falls in der erfindungsgemäß hergestellten Kautschukmischung Butadien-Kautschuk (= BR, Polybutadien) enthalten ist, kann es sich um alle dem Fachmann bekannten Typen handeln. Darunter fallen u.a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z.B. Li-BR (Lithium-katalysierter Butadien-Kautschuk) mit einem cis-Anteil von 20 bis 50 Gew.-%. Mit einem high-cis BR werden besonders gute Eigenschaften sowie eine niedrige Hysterese der Kautschukmischung erzielt.
Das oder die eingesetzte(n) Polybutadiene kann/können mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder Siloxan-Gruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Für den Fall, dass wenigstens ein Styrol-Butadien-Kautschuk (Styrol-Butadien-Copolymer) in der Kautschukmischung enthalten ist, kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet.
Das eingesetzte Styrol-Butadien-Copolymer kann mit den oben beim Polybutadien genannten Modifizierungen und Funktionalisierungen endgruppenmodifiziert und/oder entlang der Polymerketten funktionalisiert sein.

Bei dem erfindungsgemäßen Verfahren wird ferner bevorzugt ebenfalls in der Grundmischstufe wenigstens ein Füllstoff zugegeben.
Bei dem Füllstoff kann es sich um alle dem Fachmann bekannten Typen handeln, insbesondere Füllstoffe, die in Kautschukmischungen für Fahrzeugreifen verwendet werden.

Bevorzugt wird als Füllstoff wenigstens ein Ruß zugegeben, wobei alle dem Fachmann bekannten Ruß-Typen denkbar sind. Ruße sind insbesondere in der ASTM D 1765 mit ihren Eigenschaften aufgelistet. Bevorzugt wird ein Ruß eingesetzt, der eine Jodadsorptionszahl gemäß ASTM D 1510 von 20 bis 180 g/kg, bevorzugt 40 bis 140 kg/g, besonders bevorzugt 60 bis 100 g/kg, und eine DBP-Zahl gemäß ASTM D 2414 von 40 bis 200 ml/100 g, bevorzugt 70 bis 180 ml/100g, besonders bevorzugt 100 bis 160 ml/100g, aufweist.

Die Menge an zugegebenen Rußen beträgt bevorzugt 20 bis 200 phr, besonders bevorzugt 20 bis 80 phr, ganz besonders bevorzugt 40 bis 70 phr, wiederum bevorzugt 50 bis 60 phr.

Gemäß einer vorteilhaften Ausführungsform der Erfindung wird der Kautschukmischung wenigstens eine Kieselsäure als Füllstoff zugegeben.

Die Kieselsäure kann hierbei zum Teil in der Grundmischstufe und zum Teil in der Fertigmischstufe zugegeben werden.
Üblicherweise wird Kieselsäure als Füllstoff in wenigstens einer Grundmischstufe zugegeben.

Gemäß einer vorteilhaften Weiterbildung der Erfindung wird die wenigstens eine Substanz gemäß Formel I) oder II) im Gemisch mit wenigstens einer Kieselsäure zugegeben.
Die Substanz wurde dabei vor der Zugabe intensiv mit Kieselsäure vermischt, sodass die Substanz in dem Gemisch an der Oberfläche der Kieselsäurepartikel vorhanden ist.

Damit werden in dieser Ausführungsform der Erfindung geringe Mengen an Kieselsäure in der Fertigmischstufe zugegeben.

Die Substanz ist hierbei bevorzugt zu 85 bis 95 Gew.-%, beispielsweise 90 Gew.-% in dem Gemisch enthalten.
Bevorzugte Mengen dieses Kieselsäure-Substanz-Gemisches, welches in der Fertigmischstufe zugegeben wird, sind 0,5 bis 10 phr, bevorzugt 0,5 bis 3 phr.

Die Menge an Kieselsäure insgesamt, also an Kieselsäure, die in Grundmischstufe(n) und/oder Fertigmischstufe(n) zugegeben wird beträgt bevorzugt 1 bis 50 phr, besonders bevorzugt 1 bis 15 phr.

Gemäß einer bevorzugten Ausführungsform der Erfindung werden der Kautschukmischung insgesamt 40 bis 80 phr wenigstens eines Rußes und 0,4 bis 15 phr wenigstens einer Kieselsäure zugegeben.

Der erfindungsgemäß hergestellten Kautschukmischung kann neben Kieselsäure und/oder Ruß noch weitere bekannte polare und/oder unpolare Füllstoffe, wie Alumosilicate, Kreide, Stärke, Magnesiumoxid, Titandioxid oder Kautschukgele, bevorzugt in Mengen kleiner als 15 phr enthalten.
Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar. Auch Graphit und Graphene sowie sogenannte "carbon-silica dual-phase filler" sind als Füllstoff denkbar.
Zinkoxid gehört im Rahmen der vorliegenden Erfindung nicht zu den Füllstoffen.

Gemäß einer bevorzugten Ausführungsform der Erfindung wird bei der Herstellung der Kautschukmischung wenigstens ein Silankupplungsagenz (Silan) zugegeben.
Dies dient der Verbesserung der Verarbeitbarkeit und zur Anbindung der Kieselsäure und anderer ggf. vorhandener polarer Füllstoffe an den Dienkautschuk. Hierbei können ein oder mehrere verschiedene Silan-Kupplungsagenzien in Kombination miteinander eingesetzt werden. Die Kautschukmischung kann somit ein Gemisch verschiedener Silane enthalten.
Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:

-SCN, -SH, -NH2 oder -Sx- (mit x = 2 bis 8).

So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S® der Firma Evonik) zugesetzt werden.
Bevorzugt wird ein Silan-Gemisch eingesetzt, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 261® der Firma Evonik erhältlich, welches z.B. in der DE 102006004062 A1 beschrieben ist. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT in verschiedenen Varianten von der Firma Momentive, USA, oder solche, die unter dem Namen VP Si 363® von der Firma Evonik Industries vertrieben werden.

Bevorzugt handelt es sich bei dem Silan um ein disulfidisches Organosilan, wie insbesondere und zum Beispiel das oben genannte TESPD.

Das wenigstens eine Silan wird bevorzugt in wenigstens einer Grundmischstufe zugegeben.

Gemäß einer bevorzugten Ausführungsform der Erfindung werden bei der Herstellung der Kautschukmischung 2 bis 30 phr, besonders bevorzugt 5 bis 30 phr, wiederum bevorzugt 5 bis 12 phr, wenigstens eines Weichmachers in wenigstens einer Grundmischstufe zugegeben.

Zu den im Rahmen der vorliegenden Erfindung verwendeten Weichmachern gehören alle dem Fachmann bekannten Weichmacher wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder insbesondere Harzsäuren oder Faktisse oder Flüssig-Polymere, deren mittleres Molekulargewicht (Bestimmung per GPC = gel permeation chromatography, in Anlehnung an BS ISO 11344:2004) zwischen 500 und 20000 g/mol liegt. Werden in der erfindungsgemäßen Kautschukmischung zusätzliche Flüssig-Polymere als Weichmacher eingesetzt, so gehen diese nicht als Kautschuk in die Berechnung der Zusammensetzung der Polymermatrix ein.
Der Weichmacher ist bevorzugt ausgewählt aus der Gruppe bestehend aus den oben genannten Weichmachern, wobei Mineralöle als Weichmacher besonders bevorzugt sind. Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Des Weiteren können der Kautschukmischung übliche Zusatzstoffe in üblichen Gewichtsteilen bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Ozonschutzwachse,
d) Harze, insbesondere Klebharze für innere Reifenbauteile, die nicht den oben bevorzugt genannten Kohlenwasserstoffharzen entsprechen,
e) Mastikationshilfsmittel, wie z. B. 2,2'-Dibenzamidodiphenyldisulfid (DBD) und
f) Prozesshilfsmittel, wie insbesondere Fettsäureester und Metallseifen, wie z.B.
Zinkseifen und/oder Calciumseifen.

Der Mengenanteil der Gesamtmenge an weiteren Zusatzstoffen beträgt 3 bis 150 phr, bevorzugt 3 bis 100 phr und besonders bevorzugt 5 bis 80 phr.
Im Gesamtmengenanteil der weiteren Zusatzstoffe kann Zinkoxid (ZnO) in den oben genannten Mengen enthalten sein.
Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.

Bei dem erfindungsgemäßen Verfahren wird eine Kautschukfertigmischung erzeugt, wobei die genannte Substanz gemäß Formel I) oder II) in wenigstens einer Fertigmischstufe zugegeben wird. Charakteristischerweise werden in einer Fertigmischstufe die Vulkanisationsagenzien, die für eine spätere Vernetzung der Mischung relevant sind, zugegeben.
Hierbei sind alle dem Fachmann bekannten Vernetzungsmechanismen denkbar.

Die Vulkanisation der erfindungsgemäß hergestellten Kautschukmischung wird bevorzugt in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.
Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS) oder eines Guanidin-Beschleunigers wie Diphenylguanidin (DPG).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.
DipDis (Bis-(Diisopropyl)thiophosphoryldisulfid) und/oder Bis(O,O-2-ethylhexyl-thiophosphoryl)Polysulfid (z. B. Rhenocure SDT 50®, Rheinchemie GmbH) und/oder Zinkdichloryldithiophosphat (z. B. Rhenocure ZDT/S®, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren®, Duralink® oder Perkalink® erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger.

Besonders bevorzugt ist die Verwendung der Beschleuniger TBBS und/oder CBS und/oder Diphenylguanidin (DPG).
Außerdem können in der Kautschukmischung Vulkanisationsverzögerer vorhanden sein.

Die Begriffe "vulkanisiert" und "vernetzt" werden im Rahmen der vorliegenden Erfindung synonym verwendet.

Die Zugabe der genannten Bestandteile und das Mischen in den jeweiligen Stufen erfolgt unter Verwendung von dem Fachmann bekannten Vorrichtungen, wie beispielsweise das Mischen in Innenmischern.

Wie oben beschrieben umfasst das Verfahren wenigstens eine Grundmischstufe, in der bevorzugt wenigstens Kautschuke und Füllstoffe miteinander vermischt werden. Die Herstellung der Kautschukgrundmischung kann dabei in nur einem einzigen Schritt erfolgen oder mehrere Schritte umfassen. Hierbei kann die Zugabe der Bestandteile zur Grundmischung beliebig aufgeteilt sein. Bevorzugt wird die Grundmischung in einem Temperaturbereich von 130 bis 160 °C hergestellt.

Auch die Erzeugung der Fertigmischung kann in einer oder mehreren Fertigmischstufen erfolgen. Bevorzugt werden Vulkanisationsagenzien, also insbesondere Schwefel und Beschleuniger, sowie wenigstens eine Substanz nach Formel I) oder II) in einer einzigen Fertigmischstufe zugegeben.

Die Temperatur bei der Fertigmischstufe ist deutlich geringer als bei der oder den Grundmischstufen. Dies liegt daran, dass somit eine unerwünschte Vorvernetzung (engl. Scorch) vermieden wird.
Bevorzugt beträgt die Temperatur bei der wenigstens einen Fertigmischstufe des erfindungsgemäßen Verfahrens 95 bis 130 °C, besonders bevorzugt 100 bis 120 °C. Die Dauer der Fertigmischstufe beträgt bevorzugt 2 bis 10 Minuten, besonders bevorzugt 2 bis 5 Minuten.

Ein weiterer Gegenstand der vorliegenden Erfindung ist eine Kautschukmischung, die nach dem erfindungsgemäßen Verfahren gemäß einer der oben beschriebenen Ausführungsformen hergestellt ist.

Zur Weiterverarbeitung der Kautschukmischung, insbesondere zur Herstellung eines Fahrzeugreifens, wird sie in die entsprechende Form gebracht, z. B. durch Extrusion, und anschließend vulkanisiert.

Ein weiterer Gegenstand der vorliegenden Erfindung ist die Verwendung der erfindungsgemäß hergestellten und vulkanisierten Kautschukmischung in Fahrzeugreifen. Hierbei ist es denkbar, dass eines oder mehrere Bauteile des Fahrzeugreifens die Kautschukmischung aufweisen, wie insbesondere der Laufstreifen, die Seitenwand, das Hornprofil, innere Bauteile, wie Gürtellagen, Gürtelbandage, Karkasslage, Innenschicht, sonstige Zwischenschichten, Wulst, Wulstverstärker, Wulstkernreiter.

Die Erfindung soll nun anhand von Vergleichs- und Ausführungsbeispielen, die in den folgenden Tabellen zusammengefasst sind, näher erläutert werden. Die Vergleichsmischungen sind mit V, die erfindungsgemäßen Mischungen sind mit E gekennzeichnet.

Die Mischungsherstellung erfolgte nach dem in der
Kautschukindustrie üblichen Verfahren unter üblichen Bedingungen in drei Stufen in einem Labormischer mit 300 Milliliter bis 3 Liter Volumen.

Die Beispiele unterscheiden sich durch den Zugabezeitpunkt der Substanz nach Formel I) und die Dauer und Temperatur der Mischstufen, wie folgt angegeben.

V1:
Grundmischstufe 1: insgesamt 5 Minuten, davon 45 Sekunden > 145 °C, Auswurftemperatur 150 °C;
Grundmischstufe 2: Nochmaliges Durchmischen der Mischung aus der ersten Stufe für 3 Minuten, Auswurftemperatur 150 °C;
Fertigmischstufe (Stufe 3): 3 Minuten, Auswurftemperatur 110 °C.

V2:
Grundmischstufe 1: insgesamt 7 Minuten, davon 300 Sekunden > 160 °C, Auswurftemperatur 162 °C;
Grundmischstufe 2: Nochmaliges Durchmischen der Mischung aus der ersten Stufe für 3 Minuten, Auswurftemperatur 150 °C;
Fertigmischstufe (Stufe 3): 3 Minuten, Auswurftemperatur 110 °C.

E1:
Grundmischstufe 1: insgesamt 5 Minuten, Auswurftemperatur 145 °C;
Grundmischstufe 2: Nochmaliges Durchmischen der Mischung aus der ersten Stufe für 3 Minuten, Auswurftemperatur 150 °C;
Fertigmischstufe (Stufe 3): 3 Minuten, Auswurftemperatur 110 °C.

In Tabelle 1 ist angegeben, welche Substanzen jeweils in welcher Stufe zugegeben wurden.

Aus sämtlichen Mischungen wurden Prüfkörper durch Vulkanisation nach t₉₅ (gemessen am Moving Disc Rheometer gemäß ASTM D 5289-12/ ISO 6502) unter Druck bei 140°C hergestellt und mit diesen Prüfkörpern für die Kautschukindustrie typische Materialeigenschaften mit den im Folgenden angegebenen Testverfahren ermittelt.
- Shore-A-Härte bei Raumtemperatur (RT) und 70 °C mittels Durometer gemäß DIN ISO 7619-1
- Rückprallelastizität bei RT und 70°C gemäß DIN 53 512, sowie daraus berechnete Differenz (Diff.) Rückprallelastizität bei 70 °C - Rückprallelastizität bei RT
- Zugfestigkeit, Spannungswert bei 300% Dehnung (M300), Bruchdehnung jeweils bei Raumtemperatur und 70 °C gemäß DIN 53 504
- Dichte gemäß Archimedes-Prinzip
- Mooney-Viskosität gemäß ASTM D1646; ML1+3 bei 100 °C (Mooney-Einheiten M.E.)
- Verlustfaktor tan d, synonym zu tan δ (Tangens Delta), bei 0 °C und 70 °C aus dynamisch-mechanischer Messung gemäß DIN 53513, Temperaturdurchlauf ("temperature sweep"); 50/30 N: statische Anfangskraft 30 N, dynamische Oszillation zwischen 30 und 50 N.

### Verwendete Substanzen:

a) Substanz I): H₂N-(CH₂)₃-SSO₃H; 90 Gew.-% auf Kieselsäure, Sumilink 100 von Sumitomo Chemical, Japan
b) Alterungsschutzmittel, Ozonschutzwachs, Zinkoxid, Stearinsäure, Prozesshilfsmittel
c) Gesamt-phr-Menge der Bestandteile aus der ersten Mischstufe, die in Stufe 2 nochmals durchmischt wurden
d) Schwefel und Beschleuniger

**Tabelle 1**

| **Mischstufe** | **Bestandteile/Beding ungen** | **Einh.** | **V1** | **V2** | **E1** |
|---|---|---|---|---|---|
| 1 | NR | phr | 85 | 85 | 85 |
| 1 | BR | phr | 15 | 15 | 15 |
| 1 | Ruß | phr | 55 | 55 | 55 |
| 1 | Kieselsäure | phr | 12 | 12 | 12 |
| 1 | Substanz I) ^{a)} | phr | 0,8 | 0,8 | - |
| 1 | Sonst. Zusatzst. ^{b)} | phr | 13 | 13 | 13 |
| 2 | *1 ^{c)} | phr | 180,8 | 180,8 | 180,0 |
| 3 | Vulka.-chem. ^{d)} | phr | 2,1 | 2,1 | 2,1 |
| 3 | Substanz I)^{a}) | phr | - | - | 0,8 |

| | **Eigenschaften** | | | | |
|---|---|---|---|---|---|
| | Visk. ML 1+3 | M. E. | 86 | 90 | 80 |
| | Dichte | g/cm3 | 1,155 | 1,155 | 1,155 |
| | Härte RT | Sh A | 67 | 67 | 67 |
| | Härte 70 °C | Sh A | 60,6 | 61 | 60,3 |
| | Rückpr. RT | % | 47 | 48,6 | 46,9 |
| | Rückpr. 70 °C | % | 59,6 | 60,1 | 59,6 |
| | Diff. Rückpr. | | 12,6 | 11,5 | 12,7 |
| | Zugf. RT | MPa | 22 | 22 | 22 |
| | M 300 RT | MPa | 16,5 | 16,8 | 16,2 |
| | Bruchdehnung RT | % | 416 | 427 | 427 |
| | Zugf. 70 °C | MPa | 16 | 17 | 17 |
| | M 300 70 °C | MPa | 11,4 | 11,6 | 11,4 |
| | Bruchdehnung 70 °C | % | 442 | 457 | 464 |
| | Tan d 0 °C | | 0,272 | 0,261 | 0,25 |
| | Tan d 70 °C | | 0,155 | 0,137 | 0,131 |

Wie an Tabelle 1 erkennbar, weist die nach dem erfindungsgemäßen Verfahren hergestellte Kautschukmischung E1 (Substanz H₂N-(CH₂)₃-SSO₃H in der Fertigmischstufe) vergleichbare oder sogar bessere Eigenschaften auf, als die nach dem Verfahren aus dem Stand der Technik (Substanz H₂N-(CH₂)₃-SSO₃H in der Grundmischstufe) hergestellten Vergleichsmischungen V1 und V2.

Die Reißeigenschaften bei Raumtemperatur und erhöhter Temperatur sind auf vergleichbarem Niveau. Zudem liegt die E1 auf einem sehr guten Niveau hinsichtlich des Zielkonfliktes aus Rollwiderstand und Nassgriff, wie an der Differenz der Rückprallelastizitäten erkennbar ist.

Die E1 weist zudem sehr gute Hystereseeigenschaften auf, s. Verlustfaktoren Tangens Delta.

Gleichzeitig weist die E1 eine sehr gute Verarbeitbarkeit auf, wie an der Mooney-Viskosität erkennbar ist.

Das erfindungsgemäße Verfahren ist dabei einfacher und energie- und kostenoptimiert.

## Patentansprüche

1. Verfahren zur Herstellung einer Kautschukmischung enthaltend wenigstens eine Substanz gemäß Formel I) oder II)
I) H₂N-R-SSO₃H
II) (H₂N-R-SSO₃)ₙMⁿ⁺,
wobei R ausgewählt ist aus der Gruppe bestehend aus C₁-C₂₀-Alkylgruppen, C₆-C₂₀-Arylgruppen, C₂-C₂₀-Alkenylgruppen, C₂-C₂₀-Alkinylgruppen; M für Metall steht und n eine ganze Zahl ist,
wobei das Verfahren wenigstens eine Grundmischstufe und wenigstens eine Fertigmischstufe umfasst,
**dadurch gekennzeichnet, dass** die wenigstens eine Substanz gemäß Formel I) oder II) in wenigstens einer Fertigmischstufe zugegeben wird.

2. Verfahren nach Anspruch 1, **dadurch gekennzeichnet, dass** R eine Alkylgruppe mit 2 bis 6 Kohlenstoffatomen ist.

3. Verfahren nach Anspruch 2, **dadurch gekennzeichnet dass** R eine Propylgruppe ist.

4. Verfahren nach einem der vorherigen Ansprüche, **dadurch gekennzeichnet, dass** Mⁿ⁺ ein Natriumion Na⁺ ist.

5. Verfahren nach einem der vorherigen Ansprüche, **dadurch gekennzeichnet, dass** die wenigstens eine Substanz gemäß Formel I) oder II) im Gemisch mit wenigstens einer Kieselsäure zugegeben wird.

6. Verfahren nach einem der vorherigen Ansprüche, **dadurch gekennzeichnet, dass** die Temperatur bei der Fertigmischstufe 95 bis 130 °C, bevorzugt 100 bis 120 °C, beträgt.

7. Verfahren nach einem der vorherigen Ansprüche, **dadurch gekennzeichnet, dass** die Dauer der Fertigmischstufe 2 bis 10 Minuten, bevorzugt 2 bis 5 Minuten, beträgt.

8. Verfahren nach einem der vorherigen Ansprüche, **dadurch gekennzeichnet, dass** bei der Herstellung der Kautschukmischung wenigstens ein Silankupplungsagenz (Silan), bevorzugt ein disulfidisches Organosilan, zugegeben wird.

9. Verfahren nach Anspruch 8, **dadurch gekennzeichnet, dass** das wenigstens eine Silan in wenigstens einer Grundmischstufe zugegeben wird.

10. Verfahren nach einem der vorherigen Ansprüche, **dadurch gekennzeichnet, dass** bei der Herstellung der Kautschukmischung 2 bis 30 phr wenigstens eines Weichmachers in wenigstens einer Grundmischstufe zugegeben werden.

11. Verfahren nach einem der vorherigen Ansprüche, **dadurch gekennzeichnet, dass** die Kautschukmischung wenigstens einen Dienkautschuk ausgewählt aus der Gruppe bestehend aus natürlichem Polyisopren, synthetischem Polyisopren, Butadien-Kautschuk und Styrol-Butadien-Kautschuk enthält.

12. Verfahren nach einem der vorherigen Ansprüche, **dadurch gekennzeichnet, dass** der Kautschukmischung 20 bis 80 phr wenigstens eines Rußes in wenigstens einer Grundmischstufe zugegeben werden.

13. Verfahren nach Anspruch 12, **dadurch gekennzeichnet, dass** der Ruß eine Jodadsorptionszahl gemäß ASTM D 1510 von 20 bis 180 kg/g, und eine DBP-Zahl gemäß ASTM D 2414 von 40 bis 200 ml/100g aufweist.

14. Kautschukmischung hergestellt nach dem Verfahren nach einem der Ansprüche 1 bis 13.

15. Verwendung der Kautschukmischung nach Anspruch 14 in Fahrzeugreifen.

## Claims

1. Process for the production of a rubber mixture comprising at least one substance according to formula I) or II)
I) H₂N-R-SSO₃H
II) (H₂N-R-SSO₃)ₙMⁿ⁺,
where R is selected from the group consisting of C₁-C₂₀ alkyl groups, C₆-C₂₀ aryl groups, C₂-C₂₀ alkenyl groups, C₂-C₂₀ alkynyl groups; M is metal and n is an integer,
where the process comprises at least one primary mixing stage and at least one completion mixing stage,
**characterized in that** the at least one substance according to formula I) or II) is added in at least one completion mixing stage.

2. Process according to Claim 1, **characterized in that** R is an alkyl group having 2 to 6 carbon atoms.

3. Process according to Claim 2, **characterized in that** R is a propyl group.

4. Process according to any of the preceding claims, **characterized in that** Mⁿ⁺ is a sodium ion Na⁺.

5. Process according to any of the preceding claims, **characterized in that** the at least one substance according to formula I) or II) is added in a mixture with at least one silica.

6. Process according to any of the preceding claims, **characterized in that** the temperature during the completion mixing stage is from 95 to 130°C, preferably 100 to 120°C.

7. Process according to any of the preceding claims, **characterized in that** the duration of the completion mixing stage is 2 to 10 minutes, preferably 2 to 5 minutes.

8. Process according to any of the preceding claims, **characterized in that** during the production of the rubber mixture at least one silane coupling agent (silane), preferably one disulfidic organosilane, is added.

9. Process according to Claim 8, **characterized in that** at least one silane is added in at least one primary mixing stage.

10. Process according to any of the preceding claims, **characterized in that** during the production of the rubber mixture 2 to 30 phr of at least one plasticizer are added in at least one primary mixing stage.

11. Process according to any of the preceding claims, **characterized in that** the rubber mixture comprises at least one diene rubber selected from the group consisting of natural polyisoprene, synthetic polyisoprene, butadiene rubber and styrenebutadiene rubber.

12. Process according to any of the preceding claims, **characterized in that** 20 to 80 phr of at least one carbon black are added to the rubber mixture in at least one primary mixing stage.

13. Process according to Claim 12, **characterized in that** the iodine adsorption number of the carbon black in accordance with ASTM D1510 is 20 to 180 kg/g, and its DBP number in accordance with ASTM D2414 is 40 to 200 ml/100 g.

14. Rubber mixture produced by the process according to any of Claim 1 to 13.

15. Use of the rubber mixture according to Claim 14 in tyres.

## Revendications

1. Procédé de fabrication d'un mélange de caoutchouc contenant au moins une substance selon la formule I) ou II)
I) H₂N-R-SSO₃H
II) (H₂N-R-SSO₃)ₙMⁿ⁺,
dans lesquelles R est choisi dans le groupe constitué par les groupes alkyle en C₁-C₂₀, les groupes aryle en C₆-C₂₀, les groupes alcényle en C₂-C₂₀, les groupes alcynyle en C₂-C₂₀ ; M représente un métal et n est un nombre entier,
le procédé comprenant au moins une étape de mélange de base et au moins une étape de mélange final,
**caractérisé en ce que** ladite au moins une substance selon la formule I) ou II) est ajoutée dans au moins une étape de mélange final.

2. Procédé selon la revendication 1, **caractérisé en ce que** R est un groupe alkyle de 2 à 6 atomes de carbone.

3. Procédé selon la revendication 2, **caractérisé en ce que** R est un groupe propyle.

4. Procédé selon l'une quelconque des revendications précédentes, **caractérisé en ce que** Mⁿ⁺ est un ion sodium Na⁺.

5. Procédé selon l'une quelconque des revendications précédentes, **caractérisé en ce que** ladite au moins une substance selon la formule I) ou II) est ajoutée en mélange avec au moins une silice.

6. Procédé selon l'une quelconque des revendications précédentes, **caractérisé en ce que** la température lors de l'étape de mélange final est de 95 à 130 °C, de préférence de 100 à 120 °C.

7. Procédé selon l'une quelconque des revendications précédentes, **caractérisé en ce que** la durée de l'étape de mélange final est de 2 à 10 minutes, de préférence de 2 à 5 minutes.

8. Procédé selon l'une quelconque des revendications précédentes, **caractérisé en ce qu'**au moins un agent de couplage silane (silane), de préférence un organosilane disulfuré, est ajouté lors de la fabrication du mélange de caoutchouc.

9. Procédé selon la revendication 8, **caractérisé en ce que** ledit au moins un silane est ajouté dans au moins une étape de mélange de base.

10. Procédé selon l'une quelconque des revendications précédentes, **caractérisé en ce que** 2 à 30 pce d'au moins un plastifiant sont ajoutées dans au moins une étape de mélange de base lors de la fabrication du mélange de caoutchouc.

11. Procédé selon l'une quelconque des revendications précédentes, **caractérisé en ce que** le mélange de caoutchouc contient au moins un caoutchouc diénique choisi dans le groupe constitué par le polyisoprène naturel, le polyisoprène synthétique, le caoutchouc de butadiène et le caoutchouc de styrène-butadiène.

12. Procédé selon l'une quelconque des revendications précédentes, **caractérisé en ce que** 20 à 80 pce d'au moins un noir de carbone sont ajoutées au mélange de caoutchouc dans au moins une étape de mélange de base.

13. Procédé selon la revendication 12, **caractérisé en ce que** le noir de carbone présente un indice d'adsorption d'iode selon ASTM D 1510 de 20 à 180 kg/g, et un indice DBP selon ASTM D 2414 de 40 à 200 ml/100 g.

14. Mélange de caoutchouc fabriqué par le procédé selon l'une quelconque des revendications 1 à 13.

15. Utilisation du mélange de caoutchouc selon la revendication 14 dans des pneus de véhicules.
